# EUROPÄISCHE PATENTANMELDUNG

(11) **EP 1 985 484 A1**
(43) Veröffentlichungstag der Anmeldung: **29.10.2008**
(21) Anmeldenummer: 08006263.1
(22) Anmeldetag: 31.03.2008
(51) Int. Cl.: B60J 7/22

(54) **Betätigungseinrichtung zum Betätigen einer Windabweisereinrichtung**

(30) Priorität: 24.04.2007 DE 102007019301
(71) Anmelder: Webasto AG, 82131 Stockdorf (DE)
(72) Erfinder: Wingen, Bernhard, 83620 Feldkirchen (DE); Pongratz, Thomas, 81925 München (DE)

(57) **Zusammenfassung**

Die vorliegende Erfindung stellt eine Betätigungseinrichtung für eine Windabweisereinrichtung bei einem Fahrzeug mit einer Dachöffnung (14) und einem Dachverschlusselement bereit, wobei die Betätigungseinrichtung wenigstens ein Betätigungskabel (30) aufweist, das mit einer Sonnenblendeneinrichtung (10) koppelbar ist, wobei das Betätigungskabel (30) die Sonnenblendeneinrichtung betätigen kann, wenn es mit der Sonnenblendeneinrichtung (10) gekoppelt ist,
wobei das Betätigungskabel (30) in eine erste Richtung bewegbar ist, in der die Sonnenblendeneinrichtung die Dachöffnung (14) freilegt, wobei das Betätigungskabel (30) dabei in einer vorbestimmten Position von der Sonnenblendeneinrichtung abgekoppelt werden kann, und wobei das Betätigungskabel in dem von der Sonnenblendeneinrichtung abgekoppeltem Zustand weiter in der ersten Richtung bewegbar ist und dabei die Windabweisereinrichtung verstellen kann.

## Beschreibung

Die vorliegende Erfindung betrifft eine Betätigungseinrichtung für einen Windabweiser in einem Fahrzeugdach mit einem verschiebbaren Deckel. Der verschiebbare Deckel kann dabei wahlweise eine Dachöffnung in dem Fahrzeug vollständig oder zumindest teilweise öffnen oder verschließen.

Ein Windabweiser für Fahrzeugdächer hat im Allgemeinen die Funktion, die Strömungsverhältnisse zu verbessern, wenn der verschiebbare Deckel in eine geöffnete Position bewegt wird. Dabei dient der Windabweiser unter anderem dazu, das Auftreten von störenden Windgeräuschen wie Pfeifgeräuschen und dergleichen zu verhindern bzw. zumindest zu reduzieren. Der Windabweiser kann hierzu beispielsweise in Abhängigkeit von der Fahrzeuggeschwindigkeit in eine entsprechende Position bewegt werden, um derartige Windgeräusche zu verhindern bzw. zu reduzieren.

Aus dem Stand der Technik, wie er in der EP 0 919 415 beschrieben ist, ist eine geöffnete Fahrzeugdachkonstruktion mit einer verschieblichen Abdeckung bekannt. Dabei sind neben der verschieblichen Abdeckung zusätzlich ein Windabweiser und eine Sonnenblende vorgesehen. Zum Betätigen des Windabweisers ist eine Antriebseinrichtung der Sonnenblende mit einem Antrieb des Windabweisers kombiniert. Die Verstellung des Windabweisers wird vorgenommen, wenn die Sonnenblende in die geschlossene Position bewegt wird, in der sie die Dachöffnung freigibt, so dass Licht durch die Dachöffnung in den Fahrzeuginnenraum gelangen kann. Dabei wird das Antriebskabel der Sonnenblende mit dem des Windabweisers verbunden, wobei eine kleinere Bewegung der Sonnenblende ein Verstellen des Windabweisers bewirkt.

Des Weiteren ist aus der DE 197 14 492 eine Betätigungsvorrichtung für einen Windabweiser in einem Fahrzeugschiebedach bekannt. Dabei kommt ein Mitnehmer mit einem Schwenkmechanismus des Windabweisers in Eingriff und schwenkt diesen in unterschiedliche Stellungen.

Weiter ist aus der DE 103 32 945 ein Schiebedach für ein Kraftfahrzeug bekannt, bei der die Verstellung des Rollos und des Windabweisers mittels derselben Antriebseinrichtung erfolgt. Dabei steht sowohl der Rollo wie der Windabweiser mit entsprechenden Antriebskabeln in Eingriff, die über ein Zahnrad und einen damit verbundenen Elektromotor als Antriebseinrichtung gesteuert werden. Dabei sind die Antriebskabel jedoch nie gleichzeitig mit dem Rollo und dem Windabweiser verbunden. Durch Drehen des Zahnrads der Antriebseinrichtung entgegen dem Uhrzeigersinn, werden die Antriebskabel mit den Antriebselementen des Rollos in Eingriff gebracht, während bei dem Drehen des Zahnrads im Uhrzeigersinn die Antriebskabel mit den Antriebselementen des Windabweisers in Eingriff gebracht werden, um diesen zu verstellen.

Die Aufgabe der Erfindung ist es, eine Betätigungseinrichtung für eine Windabweisereinrichtung bereitzustellen, bei der ein Betätigungskabel sowohl für die Betätigung der Windabweisereinrichtung wie auch für die Betätigung einer Sonnenblendeneinrichtung, wie beispielsweise einem Rollo oder einem Schiebehimmel, verwendet werden kann, wobei das Betätigungskabel einfach betätigt werden kann.

Diese Aufgabe wird durch eine Betätigungseinrichtung für eine Windabweisereinrichtung bei einem Fahrzeug mit einer Dachöffnung und einem Dachverschlusselement gelöst,
- wobei die Betätigungseinrichtung wenigstens ein Betätigungskabel aufweist, das mit einer Sonnenblendeneinrichtung koppelbar ist,
- wobei das Betätigungskabel die Sonnenblendeneinrichtung betätigen kann, wenn es mit der Sonnenblendeneinrichtung gekoppelt ist,
- wobei das Betätigungskabel in eine erste Richtung bewegbar ist, in der die Sonnenblendeneinrichtung die Dachöffnung freilegt, wobei das Betätigungskabel dabei in einer vorbestimmten Position von der Sonnenblendeneinrichtung abgekoppelt werden kann, und
- wobei das Betätigungskabel in dem von der Sonnenblendeneinrichtung abgekoppeltem Zustand weiter in der ersten Richtung bewegbar ist und dabei die Windabweisereinrichtung verstellen kann.

Eine solche Betätigungseinrichtung hat den Vorteil, dass die Sonnenblendeneinrichtung und die Windabweisereinrichtung sehr einfach betätigt werden können, unabhängig von der Betätigung des Schiebedachs. Die Bewegungsrichtung des Betätigungskabels muss dabei nicht geändert werden, um einerseits die Sonnenblendeneinrichtung in eine Position zu bewegen, in der die Dachöffnung freigelegt ist und andererseits die Windabweisereinrichtung aufgestellt werden kann. Des Weiteren kann das Betätigungskabel durch das Abkoppeln von der Sonnenblendeneinrichtung als unabhängiges Kabel zur Betätigung der Windabweisereinrichtung verwendet werden.

Weitere Ausgestaltungen der Erfindung sind in den Unteransprüchen ausgeführt.

In einer Ausführungsform der Erfindung ist die Sonnenblendeneinrichtung auf einer oder beiden Seiten jeweils mit einer Gleiteranordnung verbunden, die in einer zugeordneten Führungsschiene verschieblich angeordnet ist. Das Betätigungskabel ist dabei mit der Gleiteranordnung koppelbar. Dies hat den Vorteil, dass das Betätigungskabel auf diese Weise einerseits temporär zuverlässig mit der Sonnenblendeneinrichtung verbunden werden kann, um diese zu betätigen und andererseits von dieser wiederum vollständig gelöst werden kann, um anderen Einrichtungen, wie der Windabweisereinrichtung, zum Betätigen zur Verfügung zu stehen.

In einer weiteren Ausführungsform weist die Gleiteranordnung ein Gleiterelement auf, wobei in dem Gleiterelement ein Riegelelement beweglich aufgenommen ist. Das Riegelelement kann dabei in wenigstens einer Aussparung in der Führungsschiene einrasten. Die Aussparung kann dabei so angeordnet sein, dass die Sonnenblendeneinrichtung in einer Endposition fixiert wird, in der es die Dachöffnung im Wesentlichen vollständig freilegt und Licht ungehindert in den Fahrgastraum eindringen kann. Dies hat den Vorteil, dass beispielsweise eine Position der Sonnenblendeneinrichtung durch die Ausbildung der Gleitanordnung mit der Einrastfunktion sehr einfach festgelegt und fixiert werden kann.

Gemäß einer weiteren erfindungsgemäßen Ausführungsform weisen das Riegelelement und das Gleitelement einen Kanal auf, in den das Betätigungskabel eingeführt und mit der Gleitanordnung gekoppelt werden kann. Der Kanal in dem Riegelelement kann dabei derart nach unten geneigt ausgebildet werden, dass wenn das Betätigungskabel in den Kanal eingeführt wird, um mit der Sonnenblendeneinrichtung gekoppelt zu werden, das Betätigungselement mit einem Vorsprung in der Vertiefung zuverlässig gehalten werden kann, so dass es nicht ungewollt herausrutscht. Ein weiterer Vorteil ist, dass das Betätigungskabel zum Einkoppeln in die Gleiteranordnung, das Riegelelement aus seiner Verrastung in der Aussparung der Führungsschiene sehr einfach lösen kann.

Die Erfindung wird im Folgenden anhand von einem Ausführungsbeispiel unter Bezugnahme auf die beiliegenden Figuren der Zeichnung näher erläutert. Hierbei zeigt:
- Fig. 1: einen Rollospriegel, der mit einem Rollo verbunden ist, und ein Betätigungskabel in einem entkoppelten Zustand;
- Fig. 2: den Rollospriegel und das Betätigungskabel gemäß Fig. 1 in einem gekoppelten Zustand, wobei der Rollospriegel in einer Position ist, in der eine Dachöffnung eines Fahrzeugs durch den mit dem Rollospriegel verbunden Rollo zumindest teilweise verdeckt ist;
- Fig. 3: der Rollospriegel gemäß Fig. 2, wobei der Rollospriegel und das mit ihm gekoppelte Betätigungskabel teilweise zurückgezogen sind, um die Dachöffnung des Fahrzeugs freizumachen, so dass Licht durch die Dachöffnung in den Fahrgastraum eindringen kann;
- Fig. 4: der Rollospriegel gemäß Fig. 3, wobei der Rollospiegel und das mit ihm gekoppelte Betätigungskabel weiter zurückgezogen sind;
- Fig. 5: der Rollospriegel gemäß Fig. 4, wobei der Rollospiegel und das mit ihm gekoppelte Betätigungskabel noch weiter zurückgezogen sind;
- Fig. 6: der Rollospriegel gemäß Fig. 5, wobei der Rollospiegel und das mit ihm gekoppelte Betätigungskabel bis zu einer Endposition zurückgezogen sind, in der die Dachöffnung vollständig freigegeben ist und das Betätigungskabel damit beginnt, sich aus seiner gekoppelten Position zu lösen;
- Fig. 7: den Rollospriegel gemäß Fig. 6 in einer eingerasteten Position, wobei sich das Betätigungskabel aus seiner gekoppelten Position gelöst hat;
- Fig. 8: den Rollospriegel und das Betätigungskabel gemäß Fig. 7, wobei sich das Betätigungskabel aus seiner gekoppelten Position vollständig gelöst hat;
- Fig. 9: den Rollospriegel und das Betätigungskabel gemäß Fig. 8, wobei sich das Betätigungskabel von dem Rollospriegel vollständig entkoppelt hat und weiter zu einer Windabweisereinrichtung bewegt wird;
- Fig. 10: den Rollospriegel und das Betätigungskabel gemäß Fig. 9, wobei das Betätigungskabel weiter zu der Windabweisereinrichtung bewegt wird; und
- Fig. 11: eine Schnittansicht durch eine Führungsschiene und eine darin beweglich angeordnete Gleiteranordnung des Rollospriegels und des Betätigungskabels.

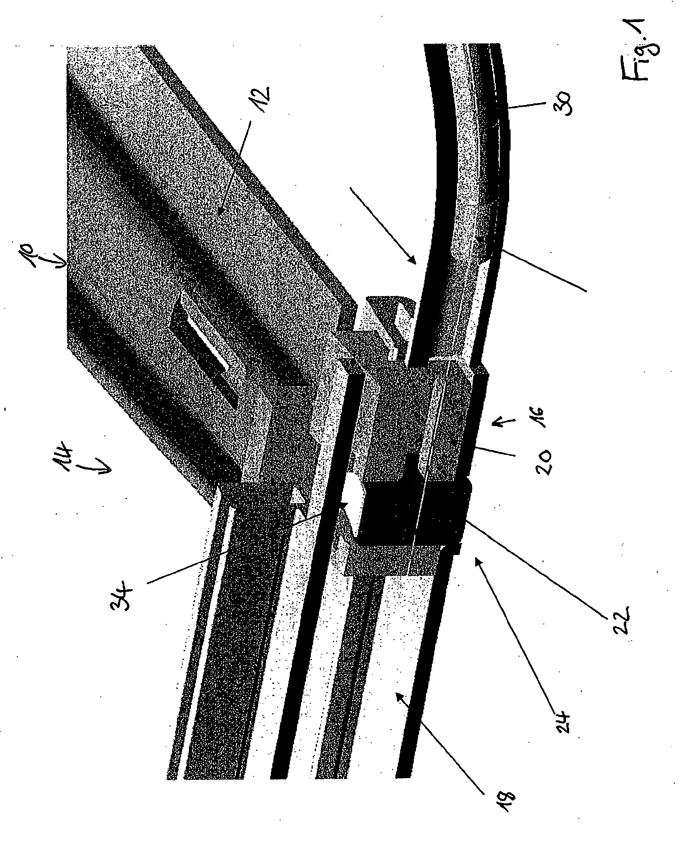

In Fig. 1 ist als Sonnenblendeneinrichtung 10 ein Rollo (nicht dargestellt) mit einem Rollospriegel 12 gezeigt. Die Sonnenblendeneinrichtung 10 dient, bei einem Fahrzeug mit einer Dachöffnung 14 mit einem Schiebedach als Dachverschlusselement, normalerweise dazu die Dachöffnung 14 entweder freizulassen, so dass Licht durch die Dachöffnung 14 bzw. das Schiebedach (normalerweise aus Glas) eindringen kann oder die Dachöffnung 14 abzudecken, so dass ein Fahrer vor einer zu starken Sonneneinstrahlung geschützt ist.

Die Sonnenblendeneinrichtung 10 in Form beispielsweise eines Rollos oder eines Schiebehimmels kann dabei entsprechend nach vorne bewegt bzw. gezogen werden, um die Dachöffnung 14 vollständig oder teilweise abzudecken oder zurückbewegt werden, um die Dachöffnung 14 frei zu lassen.

Die Sonnenblendeneinrichtung 10, wie hier der Rollo, kann dabei beispielsweise elektrisch über eine Antriebseinrichtung betätigt werden und/oder auch manuell. Dabei kann der Rollo beispielsweise in Abhängigkeit oder auch unabhängig von dem Schiebedach betätigbar ausgebildet sein. Statt eines Rollos kann, wie zuvor beschrieben, beispielsweise auch ein verschiebbarer Schiebehimmel (nicht dargestellt) verwendet werden.

Die vorliegende Ausführungsform wird anhand eines Rollos als Sonnenblendeneinrichtung 10 näher beschrieben, kann aber genauso auf einen Schiebehimmel entsprechend angewendet werden. Das Funktionsprinzip, wie im nachfolgenden erläutert wird, bleibt dabei dasselbe.

Der Rollospriegel 12 und der an ihm befestigte Rollo wird über eine Gleiteranordnung 16 in einer Führungsschiene 18 im Fahrzeugdach bewegt. Die Gleiteranordnung 16 besteht dabei aus einem Gleiterelement 20, innerhalb dem wenigstens ein Riegelelement 22 beweglich angeordnet ist. Des Weiteren ist in der Führungsschiene 18 wenigstens eine Aussparung 24 vorgesehen, in die das Riegelelement 22 der Gleiteranordnung 16 einrasten kann. In dem Riegelelement 22 und dem Gleiterelement 20 ist ein Kanal 26, 28 vorgesehen, in dem ein Betätigungskabel 30 aufnehmbar ist. Das Betätigungskabel 30 weist hierzu beispielsweise an seinem Endstück eine Steuernase mit einem Vorsprung 32 auf, der in dem Kanal 26, 28 aufgenommen und geführt werden kann.

In der Darstellung in Fig. 1 ist das Betätigungskabel 30 von der Gleiteranordnung 16 abgekoppelt bzw. getrennt. Dadurch kann das Betätigungskabel 30 über eine Antriebseinrichtung und/oder manuell, beispielsweise über eine Kurbel, weiter in eine erste Richtung bewegt werden. Hierzu schließt sich beispielsweise als Führung für das Betätigungskabel 30 ein seitlicher Schlitz in einem Rahmenteil an die Führungsschiene 18 an. Das Betätigungskabel 30 kann dabei beispielsweise mit der Windabweisereinrichtung (nicht dargestellt) bzw. einer Kulisse der Windabweisereinrichtung gekoppelt werden. Alternativ kann das Betätigungskabel 30 aber auch mit der Windabweisereinrichtung fest verbunden sein, um diese zu verstellen.

Die Windabweisereinrichtung, die in ihrer Höhe in einer oder mehreren Positionen aufgestellt werden kann, um beispielsweise Windgeräusche zu dämpfen, kann mit dem Betätigungskabel 30 verstellt werden. Hierzu ist beispielsweise denkbar, dass das Betätigungskabel 30 nach dem Abkoppeln von der Gleiteranordnung 16 des Rollospriegels 12 mit der Windabweisereinrichtung koppelbar ist, um diese beispielsweise in ihrer Stellung zusätzlich zu verändern. Beispielsweise kann das Betätigungskabel 30 mit der Windabweisereinrichtung derart gekoppelt werden, dass es die Windabweisereinrichtung derart betätigen kann, dass die Position der Windabweisereinrichtung verändert wird, beispielsweise indem die Windabweisereinrichtung höher aufstellt wird, um Windgeräusche besser zu unterdrücken. Die Windabweisereinrichtung kann dabei eine eigene Antriebseinrichtung aufweisen und über das Betätigungskabel 30 zusätzlich verstellt werden, so dass verschiedene Positionen bzw. Verstellwinkel realisiert werden können. Alternativ kann die Windabweisereinrichtung aber auch nur über das Betätigungskabel verstellt werden, um Windgeräusche geeignet zu reduzieren bzw. deren Auftreten zu verhindern.

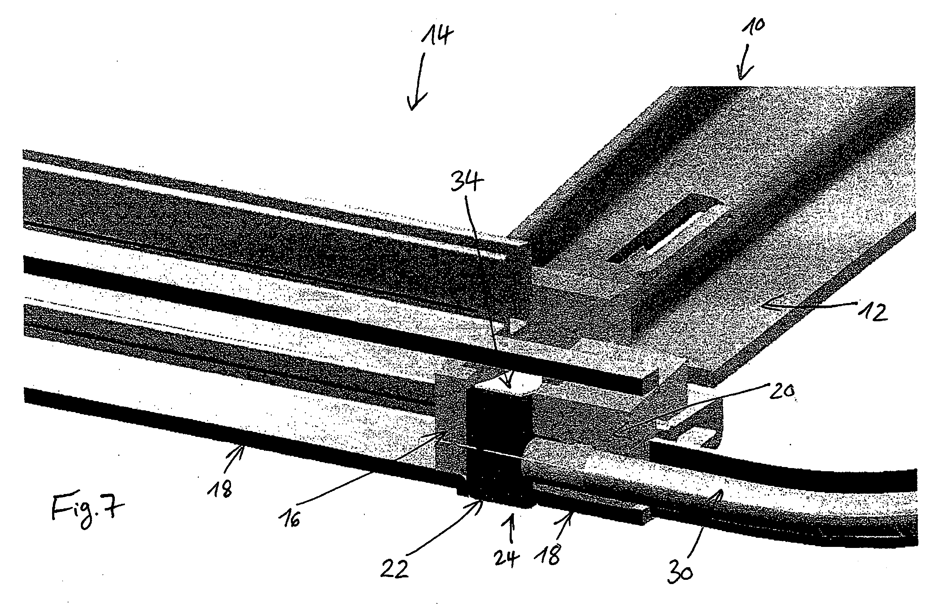

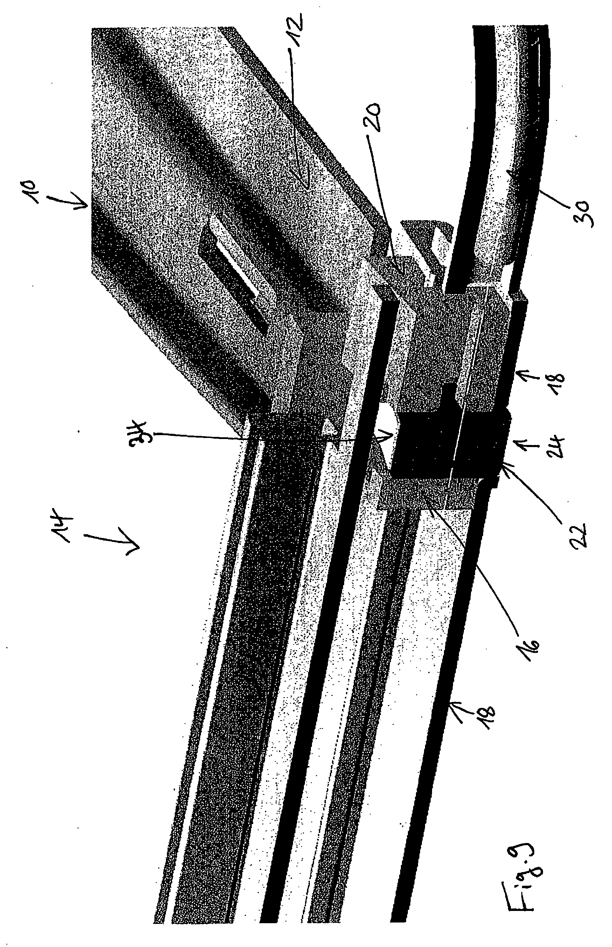

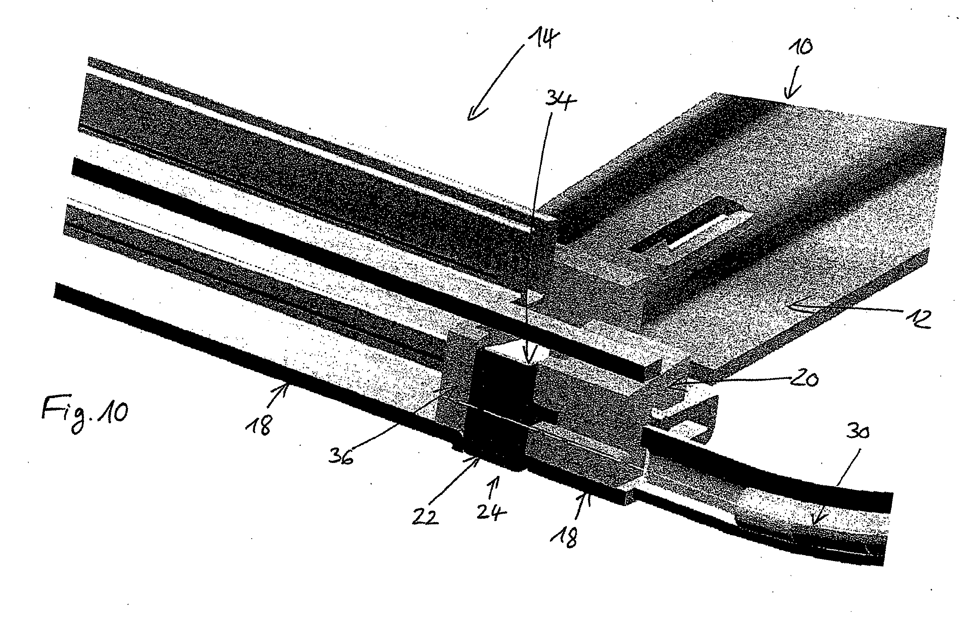

Die Führungsschiene 18 ist dabei in den Fig. 1 bis 10 in einer Teilschnittansicht gezeigt, um die Anordnung der Gleiteranordnung 16, des Riegelelements 22 und des Betätigungskabels 30 innerhalb der Führungsschiene 18 zu zeigen. Eine solche Führungsschiene 18 und die dazugehörende Gleiteranordnung 16, sowie das Betätigungskabel 30, können dabei auf einer oder beiden Seiten des Rollos angeordnet sein.

In der zurückgezogenen Position des Rollospriegels 12 bzw. des Rollos und der Gleiteranordnung 16, in der der Rollo die Dachöffnung 14 des Fahrzeugs beispielsweise vollständig freilegt, ist das Riegelelement 22 in der Aussparung 24 auf der Unterseite der Führungsschiene 18 eingerastet. Die Gleiteranordnung 16 kann wahlweise zusätzlich ein Federelement 34 aufweisen, über das das Riegelelement 22 in die Aussparung 24 gedrückt werden kann und über welches das Riegelelement 22 auch in der Aussparung 24 gehalten werden kann. Grundsätzlich kann das Riegelelement 22 aber auch nur über die Schwerkraft in die Aussparung 24 der Führungsschiene 18 bewegt und dort gehalten werden.

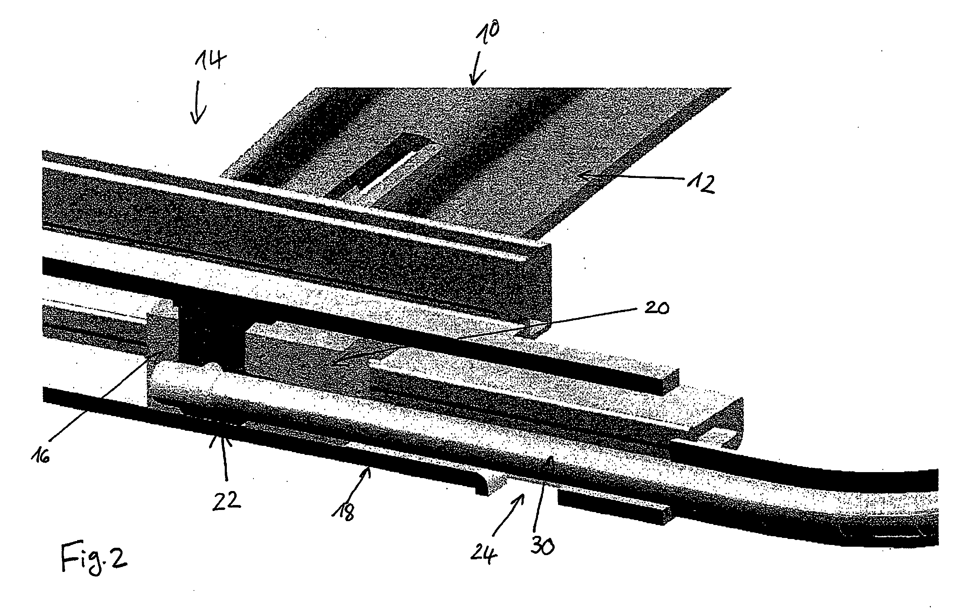

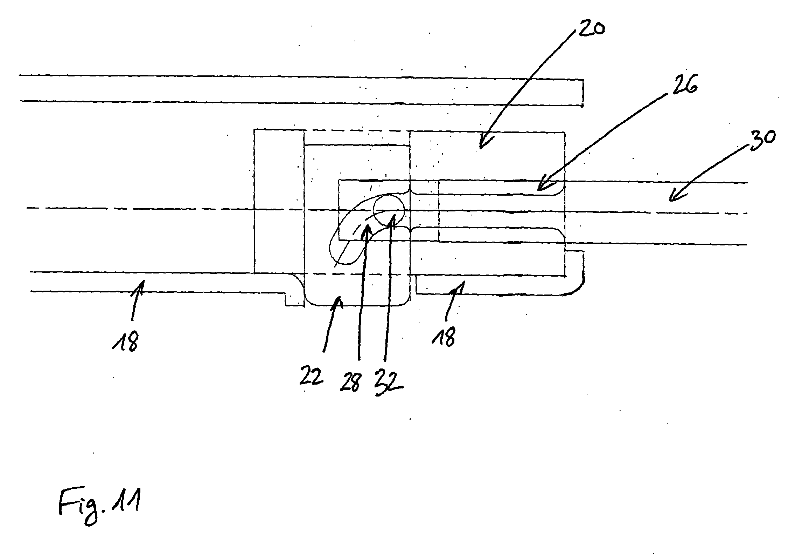

In Fig. 2 ist der Rollospriegel 12 bzw. der Rollo im Gegensatz zu der Fig. 1 mit dem Betätigungskabel 30 gekoppelt bzw. verbunden. Der Rollospriegel 12 und der damit verbundene Rollo sind dabei in einer Position, in der die Dachöffnung 14 des Fahrzeugs (nicht dargestellt) zumindest teilweise durch das Rollo abgedeckt ist, so dass eine Sonneneinstrahlung reduziert wird. Dabei ist der Rollospriegel 12 und der Rollo in einer nach vorne gezogenen Position. Das Betätigungskabel 30 wird dabei mit seinem Vorsprung 32 in einem Kanal 28 des Riegelelements 22 gehalten bzw. "eingerastet", dadurch dass der Kanal 28 nach unten geneigt ist. Dies ist insbesondere in Fig. 11 gezeigt, auf die im Nachfolgenden noch eingegangen wird. Durch die Neigung des Kanals 28 kann hierbei eine Art Einrastfunktion erzielt werden, in dem Sinne, dass das Betätigungskabel 30 in dem Riegelelement 22 bzw. der Gleiteranordnung 16 gehalten wird, wenn das Betätigungskabel 30 in eine erste Richtung bewegt wird, in der der Rollo in eine Position bewegt wird, in der die Dachöffnung freigelegt wird. Grundsätzlich sind aber auch andere Einrastausführungen denkbar, die ein ungewolltes Herausrutschen des Betätigungskabels 30 aus dem Kanal 26, 28 verhindern.

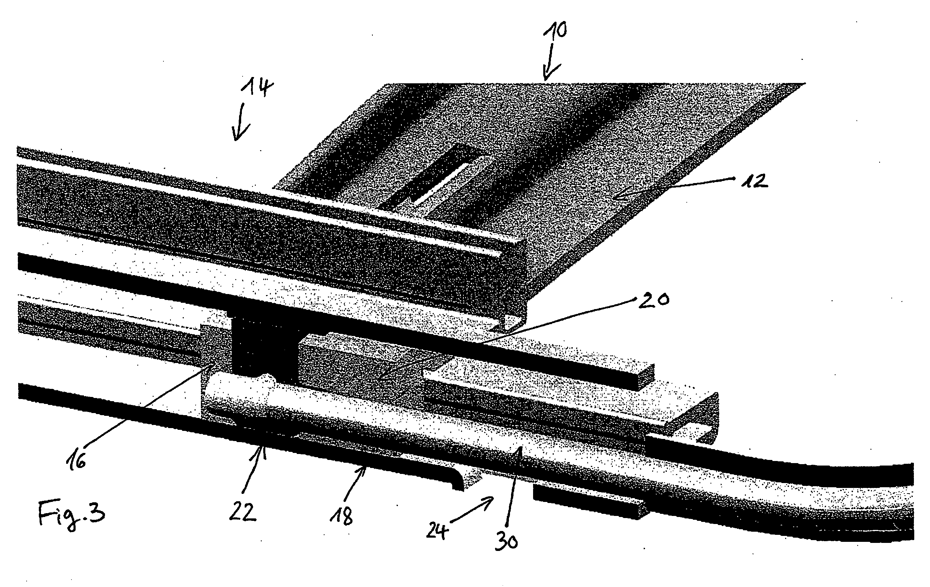

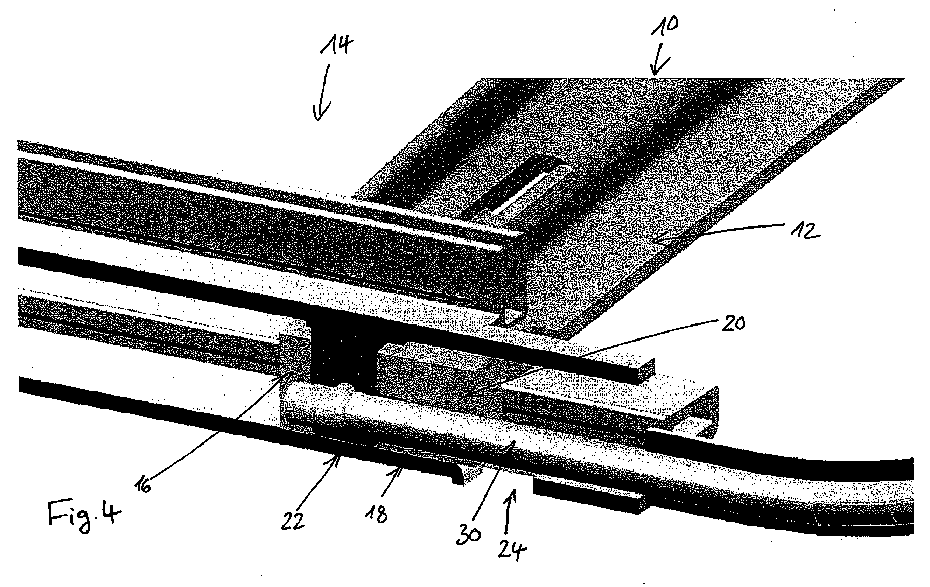

Fig. 3 zeigt den Rollospriegel 12 und das mit der Gleiteranordnung 16 gekoppelte bzw. verbundene Betätigungskabel 30 in einer weiter zurückgezogenen Position. In Fig. 4 ist der Rollospriegel 12 und das damit gekoppelte Betätigungskabel 30 noch weiter zurückgezogen.

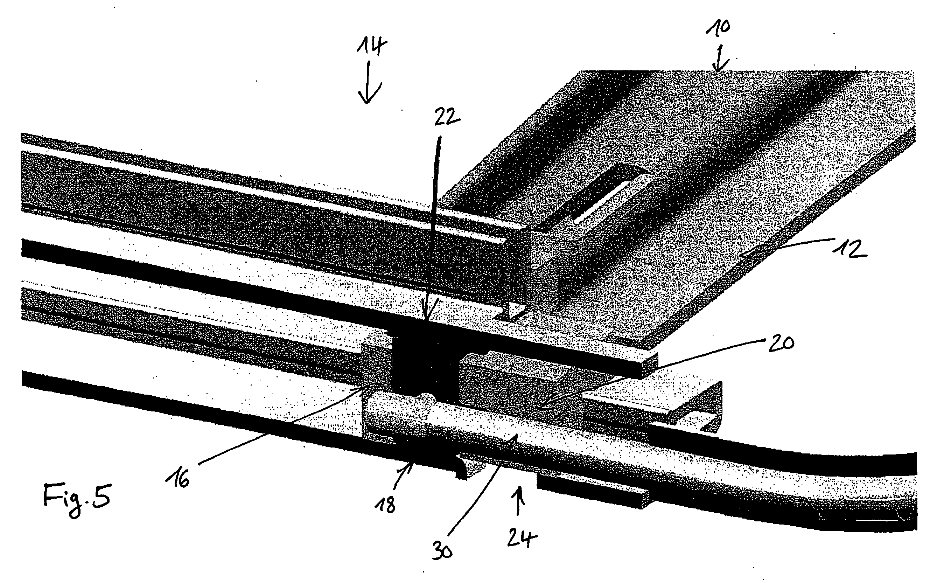

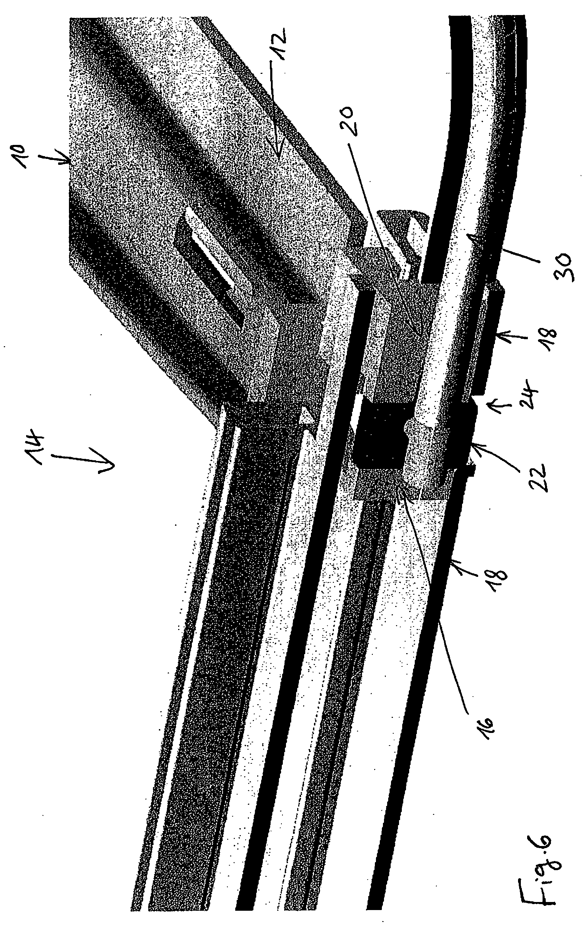

In Fig. 5 sind der Rollospriegel 12 und die Gleiteranordnung 16 sowie das mit der Gleiteranordnung 16 gekoppelte Betätigungskabel 30 soweit zurückgezogen, dass das Gleiterelement 20 der Gleiteranordnung 16 die Aussparung 24 in der Führungsschiene 16 erreicht. Das Gleiterelement 20 gleitet dabei über die Aussparung 24 hinweg. Wie in Fig. 6 gezeigt ist, rastet das beweglich Riegelelement 22 dagegen in die Aussparung 24 der Führungsschiene 18 ein, wenn der Rollospriegel 12 und die mit ihm verbundene Gleiteranordnung 16 weiter zurückgezogen bzw. in die erste Richtung bewegt werden. Die Aussparung 24 kann dabei in der Führungsschiene 18 beispielsweise derart positioniert sein, dass der Rollospriegels 12 und der mit ihm verbundene Rollo eine Endposition erreichen, in der der Rollo vollständig zurückgezogen ist und die Dachöffnung des Fahrzeugs ganz freigelegt ist.

Das Riegelelement 22 wird dabei durch das Federelement 34 nach unten in die Aussparung 24 bewegt bzw. gedrückt und dort vorzugsweise durch das Federelement 34 auch gehalten. Alternativ ist in diesem Zusammenhang auch denkbar, dass die Aussparung 24 nicht auf der Unterseite der Führungsschiene 18 vorgesehen ist, sondern beispielsweise auf der Oberseite, wobei das Federelement 34 in diesem Fall derart ausgebildet und angeordnet ist, dass es das Riegelelement 22 entsprechend nach oben drückt und dort auch hält. Grundsätzlich kann auch die Aussparung 24 seitlich in der Führungsschiene 18 angeordnet sein und das Federelement 34 ebenfalls entsprechend so positioniert werden, dass es das Riegelelement 22 in die Aussparung 24 drückt und dort hält.

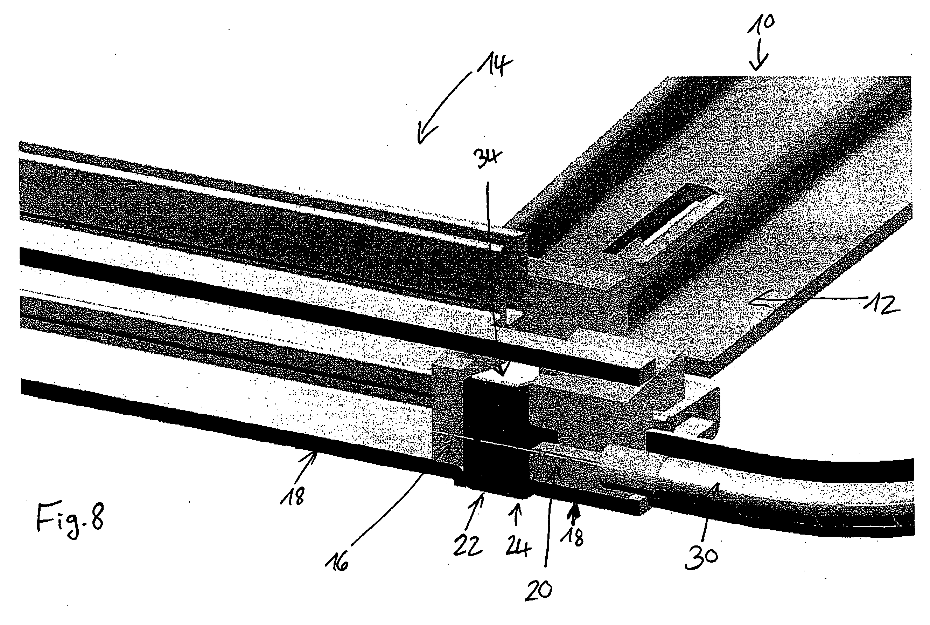

Sobald das Riegelelement 22 in der Aussparung 24 der Führungsschiene 18 aufgenommen ist, kann die Gleiteranordnung 16 und der Rollospriegel 12, sowie der damit verbundene Rollo nicht weiter in der ersten Richtung zurückbewegt werden. Das Betätigungskabel 30 kann dagegen weiter zurückgezogen bzw. weg von der Gleiteranordnung 16 bewegt werden. Dabei kann sich das Betätigungskabel 30 von dem Riegelelement 22 lösen bzw. aus dessen Vertiefung herausgezogen und damit von diesem entkoppelt werden. Das Betätigungskabel 30 kann weiter aus dem Kanal 28 des Gleitelements 20 herausbewegt werden oder, wie in den Fig. 8, 9 und 10, dargestellt vollständig aus der Gleiteranordnung 16 herausbewegt werden. Das Betätigungskabel 30 kann dabei weiterbewegt werden, während das Riegelelement 22 die Gleiteranordnung 16 in einer vorbestimmten Position fixiert.

Das Betätigungskabel 30 kann dabei zu der Windabweisereinrichtung bewegt werden und mit dieser gekoppelt bzw. in Eingriff gebracht werden, wobei die Windabweisereinrichtung in ihrer Position bzw. ihrem Verstellwinkel durch das Betätigungskabel 30 verändert werden kann. Beispielsweise ist denkbar, dass die Windabweisereinrichtung in ihrer Höhe weiter aufgestellt wird. Die Windabweisereinrichtung kann dabei eine separate Verstelleinrichtung aufweisen, um den Aufstellwinkel einzustellen. Dabei kann das Betätigungskabel 30 als eine zusätzliche Unterstützung wirken und eine noch höhere oder eine andere Aufstellung der Windabweisereinrichtung bewirken als dies durch die Verstelleinrichtung möglich oder sinnvoll ist. Alternativ ist aber auch denkbar, dass die Windabweisereinrichtung statt zusätzlich über das Betätigungskabel 30 positioniert zu werden, ausschließlich über das Betätigungskabel 30 positioniert bzw. verstellt wird.

Das Betätigungskabel 30 kann grundsätzlich auch beispielsweise fest mit der Windabweisereinrichtung verbunden sein, sofern eine geeignete Verstellung der Windabweisereinrichtung gewährleistet werden kann.

Um die Dachöffnung 14 durch das Rollo wieder abzudecken, um eine zu starke Sonneneinstrahlung zu verhindern, wird das Betätigungskabel 30 entgegen der ersten Richtung wieder nach vorne bewegt.

Das Betätigungskabel 30 wird dabei wieder in den Kanal 26, 28 der Gleiteranordnung 16 eingeführt. Hierbei kann das Betätigungskabel 30 durch den Kanal 26 des Gleiterelements 20 bis in den Kanal 28 des Riegelelements 22 eingeschoben werden. Durch die nach unten geneigte Ausführung des Kanals 28 des Riegelelements 22 drückt das Betätigungskabel 30 das Riegelelement 22 entgegen der Kraft des Federelements 34 nach oben bzw. aus der Aussparung 24 der Führungsschiene 18 heraus. Das Betätigungskabel 30, das hierbei mit der Gleiteranordnung 16 wieder gekoppelt wird, ermöglicht dadurch, dass die Gleiteranordnung 16 bzw. der Rollospriegel 12 und der damit verbundene Rollo wieder verschoben werden können. Die Gleiteranordnung 16 und der Rollo können dabei nach vorne geschoben werden, so dass der Rollo die Dachöffnung teilweise oder vollständig abdeckt und so beispielsweise als Sonnenschutz wirkt.

In Fig. 11 ist eine Schnittansicht der Führungsschiene 18 und der darin beweglich geführten Gleiteranordnung 16 gezeigt. Die Gleiteranordnung 16 besteht dabei aus dem Gleitelement 20 in dem beweglich das Riegelelement 22 geführt ist. Das Gleitelement 20 und das Riegelelement 22 weisen jeweils einen zusammenhängenden Kanal 26, 28 auf, indem ein Vorsprung 32 bzw. Zapfen des Betätigungskabels 30 aufnehmbar ist. Das Riegelelement 22 ist in der Darstellung in Fig. 11 in der Aussparung 24 der Führungsschiene 18 eingerastet, während der Vorsprung 32 aus der Vertiefung bzw. der Halterung des Kanals 28 des Riegelelements 22 herausgezogen und dabei entkoppelt wird. Dabei kann wahlweise zusätzlich, wie oben bereits ausführlich beschrieben wurde, ein Federelement angeordnet werden, welches das Riegelelement 22 in die Aussparung 34 drückt und dort hält.

Obwohl die vorliegende Erfindung anhand bevorzugter Ausführungsbeispiele vorliegend beschrieben wurde, ist sie darauf nicht beschränkt, sondern auf vielfältige Weise modifizierbar.

### Bezugszeichenliste

- 10: Sonnenblendeneinrichtung
- 12: Rollospriegel
- 14: Dachöffnung
- 16: Gleiteranordnung
- 18: Führungsschiene
- 20: Gleiterelement
- 22: Riegelelement
- 24: Aussparung
- 26: Kanal (Gleiterelement)
- 28: Kanal (Riegelelement)
- 30: Betätigungskabel
- 32: Vorsprung
- 34: Federelement

## Patentansprüche

1. Betätigungseinrichtung für eine Windabweisereinrichtung bei einem Fahrzeug mit einer Dachöffnung (14) und einem Dachverschlusselement, wobei die Betätigungseinrichtung wenigstens ein Betätigungskabel (30) aufweist, das mit einer Sonnenblendeneinrichtung (10) koppelbar ist,
- wobei das Betätigungskabel (30) dazu ausgelegt ist, die Sonnenblendeneinrichtung (10) zu betätigen, wenn es mit der Sonnenblendeneinrichtung (10) gekoppelt ist,
- wobei das Betätigungskabel (30) in eine erste Richtung bewegbar ist, in der die Sonnenblendeneinrichtung (10) die Dachöffnung (14) freilegt, und wobei das Betätigungskabel (30) dabei in einer vorbestimmten Position von der Sonnenblendeneinrichtung (10) abkoppelbar ist, und
- wobei das Betätigungskabel (30) in dem von der Sonnenblendeneinrichtung (10) abgekoppelten Zustand weiter in der ersten Richtung bewegbar ist und dabei die Windabweisereinrichtung verstellt.

2. Betätigungseinrichtung nach Anspruch 1
**dadurch gekennzeichnet,**
**dass** die Sonnenblendeneinrichtung (10) auf einer oder beiden Seiten jeweils mit einer Gleiteranordnung (16) verbunden ist, die in einer zugeordneten Führungsschiene (18) verschieblich angeordnet ist.

3. Betätigungseinrichtung nach Anspruch 2
**dadurch gekennzeichnet,**
**dass** das Betätigungskabel (30) mit der Gleiteranordnung (18) koppelbar ist.

4. Betätigungseinrichtung nach Anspruch 2 oder 3
**dadurch gekennzeichnet,**
**dass** die Gleiteranordnung (18) ein Gleiterelement (20) aufweist, in welchem ein Riegelelement (22) beweglich aufgenommen ist.

5. Betätigungseinrichtung nach Anspruch 4
**dadurch gekennzeichnet,**
**dass** das Riegelelement (22) in wenigstens einer Aussparung (24) in der Führungsschiene (18) einrastbar ist, wobei wahlweise zusätzlich wenigstens ein Federelement (34) vorgesehen ist, über dass das Riegelelement (22) in die Aussparung (24) bewegbar ist.

6. Betätigungseinrichtung nach Anspruch 5
**dadurch gekennzeichnet,**
**dass** die Aussparung (24) so angeordnet ist, dass die Sonnenblendeneinrichtung (10) in einer Position befindlich ist, in der es die Dachöffnung (14) im Wesentlichen vollständig freilegt, wenn das Riegelelement (22) in die Aussparung (24) einrastet.

7. Betätigungseinrichtung nach einem der Ansprüche 4 bis 6
**dadurch gekennzeichnet,**
**dass** das Riegelelement (22) und das Gleitelement (20) einen Kanal (26, 28) zum Durchführen des Betätigungskabels (30) aufweisen, wobei das Betätigungskabel (30) beispielsweise wenigstens einen Vorsprung (32) aufweist, der in dem Kanal (26, 28) geführt werden kann.

8. Betätigungseinrichtung nach einem der Ansprüche 2 bis 7
**dadurch gekennzeichnet,**
**dass** die Sonnenblendeneinrichtung (10) mit dem Betätigungskabel (30) gekoppelt ist, wenn das Betätigungskabel (30) in die Gleiteranordnung (16) eingeführt und eingerastet ist, und dass die Sonnenblendeneinrichtung (10) und das Betätigungskabel (30) entkoppelt sind, wenn das Betätigungskabel (30) nicht mit der Gleiteranordnung (16) verrastet ist und aus dieser herausbewegt werden kann.

9. Betätigungseinrichtung nach Anspruch 8
**dadurch gekennzeichnet,**
**dass** der Kanal (28) in dem Riegelelement (22) derart geneigt ausgebildet ist, dass, wenn das Betätigungskabel (30) in den Kanal (28) eingeführt wird, um mit der Sonnenblendeneinrichtung (10) gekoppelt zu werden, das Riegelelement (22) aus seiner eingerasteten Position heraus bewegbar ist.

10. Betätigungsvorrichtung nach einem der Ansprüche 1 bis 9
**dadurch gekennzeichnet,**
**dass** das Betätigungskabel (30) mit der Windabweisereinrichtung fest verbunden ist oder mit dieser gekoppelt ist, wenn das Betätigungskabel (30) von der Sonnenblendeneinrichtung (10) entkoppelt ist und in die erste Richtung weiter bewegt wird.

11. Betätigungsvorrichtung nach Anspruch 10
**dadurch gekennzeichnet,**
**dass** die Betätigungseinrichtung mit dem Betätigungskabel (30) eine zusätzliche Betätigungseinrichtung für die Windabweisereinrichtung zur Verstellung der Windabweisereinrichtung bildet.

12. Betätigungseinrichtung nach einem der Ansprüche 1 bis 11
**dadurch gekennzeichnet,**
**dass** Betätigungskabel (30) manuell betätigbar und/oder elektrisch betätigbar ist.

13. Betätigungseinrichtung nach einem der Ansprüche 1 bis 12
**dadurch gekennzeichnet,**
**dass** die Sonnenblendeneinrichtung (10) als Rollo oder als Schiebehimmel ausgebildet ist.

14. Fahrzeug,
- mit einem Dachverschlusselement,
- mit einer Sonnenblendeneinrichtung (10) und
- mit einer Windabweisereinrichtung, welche mit einer Betätigungseinrichtung gemäß einem der Ansprüche 1 bis 13 ausgestattet ist.
